# EUROPÄISCHE PATENTANMELDUNG

(11) **EP 1 862 523 A1**
(43) Veröffentlichungstag der Anmeldung: **05.12.2007**
(21) Anmeldenummer: 06011430.3
(22) Anmeldetag: 01.06.2006
(51) Int. Cl.: C09K 8/26, C09K 8/32, C09K 8/28

(54) **Bohrspülung mit geringer Toxizität**

(71) Anmelder: Cognis Oleochemicals GmbH, 40589 Düsseldorf (DE)
(72) Erfinder: Müller, Heinz, 40789 Monheim (DE); Herzog, Nadja, 41352 Korschenbroich (DE); von Tapavicza, Stephan, Dr., 40699 Erkrath (DE)
(74) Vertreter: Reinhardt, Jürgen

(57) **Zusammenfassung**

Beschrieben wird ein Verfahren zur Verringerung der Toxizität der nicht-wässerigen Phasen von Bohrlochbehandlungsmitteln, gemessen nach ASTM E 1367 - 92 & EPA/600/R-94/025, Section 11, wobei die Bohrlochbehandlungsmittel eine wässerige Phase, eine Ölphase und mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel enthalten, dadurch gekennzeichnet, dass man den formulierten Bohrspülungen Antioxidantien, ausgewählt aus der Gruppe der Tocopherole und deren Derivaten zusetzt.

## Beschreibung

Die vorliegende Erfindung betrifft Bohrlochbehandlungsmittel mit geringer Toxizität sowie die Verwendung bestimmter Additive zur Beeinflussung der Toxizität der Bohrlochbehandlungsmittel.

Bohrlochbehandlungsmittel sind alle Arten von Hilfsflüssigkeiten, die bei der Erbohrung von Erdöl- oder Erdgas-Lagerstätten Einsatz finden können. Als charakteristisches Beispiel für solche Behandlungsmittel wird im nachfolgenden die Erfindung anhand von Bohrspülflüssigkeiten und darauf aufgebauten Bohrspülschlämmen beschrieben, die sowohl bei landgestützten als auch bei seegestützten Bohrungen Verwendung finden können. Das Anwendungsgebiet der erfindungsgemäßen Abwandlung von Hilfsflüssigkeiten der hier betroffen Art ist jedoch nicht darauf beschränkt. In Betracht kommen die zahlreichen weiteren Hilfsflüssigkeiten des hier angesprochenen Sachgebiets. Als Beispiele seien benannt Spotting Fluids, Spacer, Packer Fluids, Hilfsflüssigkeiten für Workover und Stimulierung und für das Fracturing. Betroffen sind durch die Erfindung dabei sowohl Hilfsflüssigkeiten der genannten Art, die ölbasiert sind, d.h. mit einer geschlossenen Ölphase arbeiten, als auch Hilfsmittel, in denen die Ölphase in einer insbesondere wässrigen geschlossenen Phase emulgiert ist. Bohrspülflüssigkeiten bzw. darauf aufgebaute Bohrspülschlämme sind charakteristische Beispiele der unterschiedlichen Möglichkeiten.

Bekannt sind einerseits wasserbasierte Bohrspülungen mit einem Gehalt an etwa 1 bis 50% emulgierter Ölphase - neben den anderen üblichen Hilfsstoffen einer solchen Bohrspülung - die auch als O/W-Emulsionsspülungen bezeichnet werden. Auf der anderen Seite sind in breitem Umfang ölbasierte Spülungssysteme im praktischen Einsatz, bei denen das Öl die fließfähige Phase (die so genannte Trägerflüssigkeit, engl. "carrier fluid") oder doch wenigstens einen substantiellen Anteil der fließfähigen Phase als geschlossene Ölphase bildet. Besondere Bedeutung haben hier die so genannten Invert-Bohrspülschlämme, die auf der Basis W/O-Emulsionen eine disperse wässrige Phase in der geschlossenen Ölphase enthalten. Der Gehalt an disperser wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die so genannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten.

Die nicht-wässerige Phase derartiger Spülungssysteme wird durch die so genannte Carrier-Fluid oder Träger- bzw. Basisflüssigkeit gebildet. Es handelte sich in der Vergangenheit in der Regel um Dieselöl, welches mit bestimmten Additiven versetzt die eigentliche Bohrspülung bildete. Mit Ende der achtziger Jahre kam aber der Bedarf nach umweltfreundlichen Spülungssystemen und somit ebensolchen Carrier-Fluids auf. Diese sollten insbesondere besser biologisch abbaubar sein, als das bislang eingesetzte Dieselöl. Neben diversen flüssigen Estern, wie sie z.B. in der EP 0 374 672 A1 beschrieben werden, wurden auch olefinische Kohlenwasserstoffe auf ihre Brauchbarkeit hin untersucht. Verwiesen sei hier exemplarisch auf die EP 0 765 368 A1 der Anmelderin, welche die Verwendung von so genannten Alpha-Olefinen als Carrier-fluid zum Gegenstand hat. In der DE 102 43 312 werden niedrig-toxische Bohrspülungssysteme offenbart, deren Carrier-Fluid Ester, Paraffine oder Olefine, bzw. deren Abmischungen enthalten, und die sich durch eine niedrige Toxizität der nicht wässerigen Pahse, gemessen nach den Leptocheirus plumulosus acute, static 96-hour/10 day sediment toxicity test (nach ASTM E 1367 - 92 & EPA/600/R-94/025, Section 11) auszeichnen. Diese Systeme zeigten aber bei erhöhter Temperatur, z.B. bei 250 °F (120 °C) oder höher einen Anstieg der F-Werte. d.h. die Spülungen wurden nach einer thermischen Belastung toxischer. Da eine Bohrspülung im praktischen Gebrauch mehrfach benutzt wird, da sie durch das Bohrloch im Kreislauf gepumpt wird stellt dieses Verhalten einen Nachteil dar.

Die Aufgabe der vorliegenden Erfindung bestand darin ein niedrig-toxische Bohrlochbehandlungsmittel, insbesondere eine Bohrspülung bereit zu stellen, die auch bei erhöhten Arbeitstemperaturen von 250 °F und höher, und insbesondere bei Temperaturen von 300 °F (149°C) und höher, keine Änderung der Toxizität erfahren. Es wurde gefunden, dass die gestellte Aufgabe gelöst wird, indem man bestimmte, ausgewählte Additive zu den Bohrspülungen hinzufügt.

Ein erster Gegenstand der vorliegenden Erfindung betrifft daher ein Verfahren zur Verringerung der Toxizität von Bohrlochbehandlungsmitteln und insbesondere von Bohrspülungen, gemessen an der nicht-wässerigen Phase nach ASTM E 1367 - 92 & EPA/600/R-94/025, Section 11, wobei die Bohrlochbehandlungsmittel eine wässerige Phase, eine Ölphase und mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel enthalten wobei dass man den formulierten Bohrspülungen Antioxidantien, ausgewählt aus der Gruppe der Tocopherole und deren Derivaten zusetzt.

Bohrspülungen oder andere Bohrlochbehandlungsmittel, die Antioxidantien enthalten sind im Prinzip bekannt. Die US 4,631,136 beschreibt Bohrspülungssysteme auf Basis von Ölen tierischer oder Pflanzlicher Herkunft, die ausgewählte Antioxidantien enthalten. Allerdings offenbart die Schrift konkret nur typische Radikalfänger, nämlich das BHA und das BHT bzw. TBQH als geeignete Verbindungen. Weiterhin löst die technische Lehre dieser Schrift nur dass Verdickungsproblem, das bei Verwendung von Triglyceriden, wie eben den pflanzlichen oder tierischen Ölen im Sinne der US 4,631, 136 auftritt. Die hoch ungesättigten Carbonsäurereste der nativen Triglyceridöle zeigen bekanntlich in Gegenwart von Sauerstoff eine Polymerisierung, was wiederum eine ungewünschte Eindickung der Systeme bedingt. Keineswegs lehrt die Schrift, dass durch Zugabe der genannten Radikalfänger ein Bohrlochbehandlungsmittel in seiner Toxizität beeinflusst werden könnte. Die US 2005/0113259 beschriebt die Verwebdung von Gallussäurederivaten als Additive zu Bohrspülungen zur Verbesserung der thermischen Stabilität. Die Schrift macht aber keinerlei Aussagen bezüglich anderer ebenfalls geeigneter Verbindungen, insbesondere findet sich kein Hinweis auf Tocopherole oder deren Derivate. Die US 6,613,720 B1 beschreibt Bohrlochbehandlungsmittel, die neben anderen üblichen Additiven auch Antioxidantien enthalten können, ohne aber eine konkrete Offenbarung derartiger Mittel zu geben.

Antioxidantien aus der Klasse der Tocopherole sind seit langem bekannt. Tocopherol ist die Bezeichnung für in 2-Stellung mit einem 4,8,12-Trimethyltridecyl-Rest substituierte Chroman-6-ole (3,4-Dihydro-2*H* 1-benzopyran-6-ole). Von der IUPAC-IUB vorgeschlagener systematischer Name für eine Reihe von Naturstoffen mit Vitamin-E-Charakter. Tocopherole sind schwach gelblich-rötliche, ölige Flüssigkeiten, unlöslich in Wasser, löslich in Fetten und Ölen sowie den üblichen Lösemitteln für Fette. Sie sind relativ stabil gegen Hitze, Säuren und Alkalien, werden von Luftsauerstoff nur langsam, jedoch in Gegenwart von Metall-Ionen wie Fe³⁺, Ag⁺ usw. besonders unter Lichteinwirkung rasch oxidiert.

Man unterscheidet unter anderem α-, β-, γ-, δ- ,ζ- und η-Tocopherole, α-, β- und γ-Tocotrienole, die noch über die ursprüngliche ungesättigte Prenyl-Seitenkette verfügen, sowie α-Tocopherolchinon und α-Tocopherolhydrochinon, bei denen das Pyran-Ringsystem geöffnet ist. Vor allem α-Tocopherol in der (2*R*,4 *'R*,8 '*R*)-Form (Trivialname: *RRR-* α-Tocopherol), aber auch β-, γ- und δ- Tocopherol, α-, β- und γ-Tocotrienol und verschiedene Tocopherolacetate und Tocopherolsuccinate besitzen Vitamin-E-Wirkung.

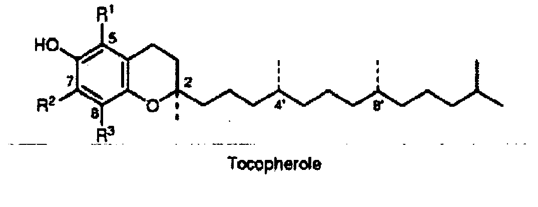

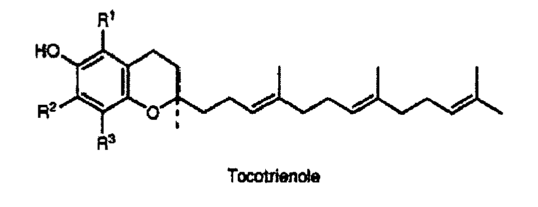

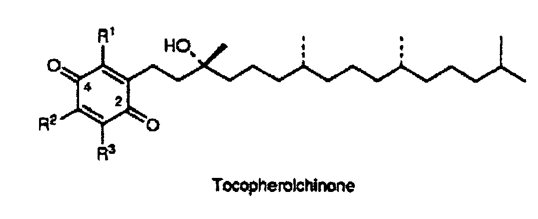

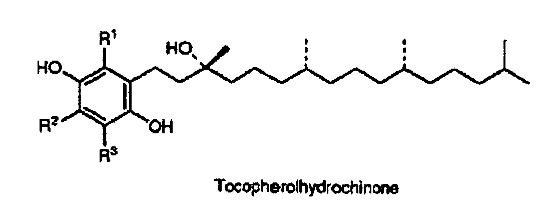

Die Vitamin E Tocopherole gehört zu den bevorzugt verwendeten Antioxidantien im Sinne der vorliegenden technischen Lehre. Namentlich das α-Tocopherol in der (2*R*,4 *'R*,8 '*R*)-Form (Trivialname: *RRR*- α-Tocopherol), aber ebenfalls bevorzugt das β-, γ- und δ-Tocopherol und das α-, β- und γ-Tocotrienol sind bevorzugte Tocopherol. Als bevorzugte Derivate werden Tocopherolacetate und Tocopherolsuccinate genannt. Es können auch Vorprodukte der Vitamin-E Synthese bzw. deren Aufreinigung verwendet werden, z.B. so genannte Sojadämpferkondensate.
Es ist generell möglich die Tocopherole bzw. deren Derivate im Sinne der vorliegenden Erfindung in Reinform, aber auch, und dies kann aus Kostengründen bevorzugt sein, in technischen Qualitäten zu Verwenden.

Es sei darauf verwiesen, dass die Bezeichnung "Antioxidans" in der vorliegenden Anmeldung keine präjudizierende Wirkung im Hinblick auf die mögliche Funktion dieser Stoffe im Rahmen der technischen Lehre zukommt. Vielmehr ist die Anmelderin an keine Theorie oder Erklärungsversuche, bezüglich der Funktionsweise der Tocopherole gebunden. Gegenstand der Anmeldung ist allein die Lehre durch Zusatz solcher Verbindungen die Toxizität von Bohrlochbehandlungsmitteln, insbesondere deren Toxizität nach Temperaturbelastungen zu verbessern.

Die Toxizität der erfindungsgemäßen Systeme bestimmt sich nach dem so genannten Leptocheirus plumulosus acute, static 96 hour/10 day sediment toxicity test nach ASTM 1367 - 92 & EPA/600/R-94/025, Section 11. Dabei sind insbesondere solche Systeme als niedrigtoxisch einzustufen, die nach Durchlaufen des Tests einen F-Wert von 1 oder kleiner aufweisen. Vorzugsweise zeigen die Systeme eine F-Wert von kleiner als 1,0 und insbesondere zwischen 0,1 und 0,8.

Die Antioxidatien werden erfindungsgemäß vorzugsweise erst den fertig formulierten Bohrspülungen zugesetzt. Dabei werden die Antioxidantien in solchen Mengen zugesetzt, dass sie in der fertig formulierten Bohrspülung in Mengen von 0,01 bis 10 Gew.-%, vorzugsweise von 0,01 bis 1 Gew.-% und insbesondere in Mengen von 0,1 bis 1 Gew.-%, bezogen auf die gesamte Bohrspülung enthalten sind. Als fertig formulierte Bohrspülungen werden solche Systeme verstanden, die eine Wasserphase und eine Ölphase enthalten sowie als Additive mindestens eine Verbindung aus der Klasser der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel. Vorzugsweise enthalten die fertig formulierten Systeme alle der oben aufgezählten Additive nebeneinander.

Bohrspülungen enthalten in der Regel eine nicht-wässeriges Grundöl, eine so genante "carrier-fluid". Es kommen hier nun im Prinzip alle dem Fachmann bekannte Carrier-Fluids zum Einsatz, wobei aber bestimmte Substanzen mit niedriger Toxizität bevorzugt sind. Soweit sind z.B. Systeme auf Basis von Dieselölen ausgeschlossen. Vorzugsweise ist die Ölphase der Bohrlochbehandlungsmittel ausgewählt aus a) Paraffinen mit 5 bis 22 C-Atomen und/oder, b) internen Olefine mit 12 bis 30 C-Atomen im Molekül jeweils in Abmischung mit c) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, oder aus Mischungen der Komponenten a) bis c).

Ein weiterer Gegenstand betrifft Bohrlochbehandlungsmittel, insbesondere Bohrspülung, enthaltend eine wässerige und eine Ölphase, sowie mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel, dadurch gekennzeichnet, wobei das Mittel zusätzlich Tocopherol oder ein Tocopherol-Derivat, insbesondere aber Vitamin E oder ein Derivat des Vitamin E enthält.

Die Ölphasen der erfindungsgemäßen Systeme enthalten die Komponenten a) und/oder b) alleine oder gemeinsam in Abmischung mit Estern c) sowie ggf. in Abmischung mit anderen geeigneten Ölphasen.

### Komponente a)

Als Komponente a) werden erfindungsgemäß lineare oder verzweigte Paraffine mit 5 bis 22 C-Atomen eingesetzt. Paraffine - korrekter bezeichnet als Alkane - sind bekanntermaßen gesättigte Kohlenwasserstoffe, die für die linearen bzw. verzweigten Vertreter der allgemeine Summenformel CₙH₂ₙ₊₁ folgen. Die cyclischen Alkane folgen der allgemeinen Summenformel CₙH₂ₙ. Besonders bevorzugt sind die linearen und verzweigten Paraffine, wohingegen cyclische Paraffine weniger bevorzugt sind. Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21 °C noch flüssig sind. Solche Mischungen können z.B. aus Paraffinen mit 10 bis 21 C-Atomen gebildet werden. Bevorzugt sind daher insbesondere verzweigte und/oder lineare Paraffine mit 10 bis 21 C-Atomen. Mit Bezug auf die Toxizität, insbesondere beim Leptocheirus plumulosus Test schneiden Paraffine alleine in der Regel nicht ausreichend ab. Typische F-Werte für Paraffine liegen zwischen 2,7 bis 4,53.

### Komponente b)

Als Komponente b) sind interne Olefine (im weiteren als IO abgekürzt) erfindungsgemäß einsetzbar. Dabei sind IO's ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der Alpha-Position der Alkylkette befindet.
Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten. Vorzugsweise weisen die erfindungsgemäß verwendeten Olefine nur eine olefinische Doppelbindung auf. Beim Leptocheirus-Test werden typischerweise F-Werte zwischen 1,1 und 2,0 erreicht.

### Komponente c)

Weiterhin sind Ester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 6 bis 22 C-Atomen bedeutet, Bestandteil der erfindungsgemäßen Ölphasen. Auch derartige Ester sind bekannte chemische Verbindungen. Deren prinzipielle Verwendung in Bohrspülungen ist z.B. Gegenstand der EP 0 374 672 A1 bzw. der EP 0 374 671 A1. Die Leptocheirus-Werte für Ester liegen typischerweise im Bereich von 1,5 bis 0,2, sodass sich derartige Verbindungen allein bereits zur Ausbildung von niedrigtoxischen Ölphasen eignen können. Allerdings müssen dazu bestimmte Kettenlängen ausgewählt sein. Besonders bevorzugt ist die Verwendung solcher Ester deren Rest R für einen gesättigten oder ungesättigten Alkylrest mit 15 bis 25 und R' für einen gesättigten Alkylrest mit 3 bis 10 C-Atomen steht. Die gesättigten Verbindungen sind dabei im Besonderen bevorzugt. Es ist im Rahmen der erfinderischen Lehre bevorzugt dass in der Ölphase neben den Estern gemäß obiger Beschreibung maximal 15 Gew.-% (bezogen die Ölphase) an anderen Estern mit Resten R, die für Alkylreste mit mehr als 23 C-Atomen stehen, enthalten sind.

Neben den Komponente a) und/oder b) und c) können noch andere, wasserunlösliche Bestandteile in den Ölphasen enthalten sein, sofern diese ökologisch verträglich sind. Weitere besonders geeignete Mischungsbestandteile der erfindungsgemäßen Ölphasen sind daher im Einzelnen:
(i) Ester aus C1-5-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, wasserunlösliche Ether einwertiger Alkohole mit 6 bis 24 C-Atomen,
(iii)wasserunlösliche Alkohole mit 8 bis 36 C-Atomen
(iv)poly-Alphaolefine (PAO) und alpha-Olefine
(v) Mischungen der Komponente (i) bis (v)

Von der Mitverwendung ausgeschlossen sind allerdings lineare alpha-Olefine der Kettenlängen C14/C16 sowie sogenannte *low toxicity* Mineralölen, da diese auch bei erfindungsgemäßer Abmischung mit Estern der Gruppe c) nicht die gewünschten Toxizitätswerte erreichen. Ebenso ist die Mitverwendung von Dieselöl ausgeschlossen. Weiterhin ist die Mitverwendung von Methylestern ausgeschlossen, da diese aufgrund ihrer hohen Toxizität nicht geeignet sind, um niedrig toxische Ölphasen im Sinne der Erfindung auszubilden. Unter bestimmten Bedingungen kann die Mitverwendung von derartigen Bestandteilen allerdings notwendig sein - die dann eingesetzten Mengen liegen aber nicht über 5 Gew.-%, vorzugsweise bei maximal 2 Gew.-%, bezogen auf die Ölphase.

Als weiteren bevorzugten Bestandteil enthalten die erfindungsgemäßen Mittel Emulgatoren. Bei deren Auswahl kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der US 4,374,737 und der dort zitierten Literatur beschrieben. Zur Herstellung von W/O-Emulsionen werden aber noch andere, vorzugsweise nicht-ionische Emulgatoren eingesetzt. Aus dem großen Bereich der nichtionischen Emulgatoren lassen sich erfindungsgemäß besonders geeignete Emulgatoren wenigstens einer der nachfolgenden Stoffklassen zuordnen: (Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Dabei bedeutet niedrig in diesem Zusammenhang Werte von 2 bis 15 und insbesondere 2 bis 10 Teilen Alkoxyd pro Molekül Emulgator. Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Geeignet sind dabei insbesondere auch Verbindungen dieser Art, die zusätzlich in ihre Molekülstruktur (Oligo)-Alkoxyreste und dabei insbesondere entsprechende Oligo-Ethoxyreste eingebunden enthalten. Ein weiteres Beispiel für entsprechende Emulgatorkomponenten sind Alkyl(poly)glykoside langkettiger Alkohole sowie die bereits benannten Fettalkohole natürlichen und/oder synthetischen Ursprungs beziehungsweise Alkylolamide, Aminoxide und Lecithine. Ohne Anspruch auf Vollständigkeit seien aus den hier aufgezählten Stoffklassen geeigneter Emulgatorkomponenten zusätzlich die folgenden Vertreter benannt: Die (Oligo)-Alkoxylate von lipophile Reste enthaltenden Grundmolekülen können sich insbesondere von ausgewählten Vertretern aus den nachfolgenden Klassen der lipophile Reste enthaltenden Grundmoleküle ableiten: Fettalkohole, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbindungen mit Ethergruppierungen.

Vorzugsweise werden die Ölphasen gebildet durch Mischungen der Komponenten a) und/oder b) mit den Esterölen c) im Gewichtsverhältnis von 10 : 1 bis 1 : 1, vorzugsweise von 5 : 1 bis 1 : 1 und insbesondere von 3 : 1 bis 1 : 1, um die gewünschte relative Toxizität zu erreichen.

Die Bohrlochbehandlungsmittel der vorliegenden Erfindungen liegen vorzugsweise als Emulsionen und insbesondere als Wasser-in-Öl Emulsion (W/O) vor, d.h. dass eine homogene Ölphase die feindisperse wässerige Phase umschließt. Besonders bevorzugt ist die Ausführung der vorliegenden erfindungsgemäßen Mittel als Bohrspülung. Die erfindungsgemäßen Mittel weisen vorzugsweise Gewichtsverhältnis zwischen der wässerigen- und der Ölphase 50 : 50 bis 1 : 99, vorzugsweise 30 : 70 bis 20 : 80 und insbesondere 10 : 90 auf. Dabei ist es bevorzugt, dass die Ölphase zu mindestens 50 Gew.-%, vorzugsweise zu mindestens 80 Gew.-% und insbesondere zu mindestens 90 Gew.-% aus Verbindungen a) und/oder b) und c) besteht. Weiterhin sind solche Bohrlochbehandlungsmittel bevorzugt, deren Ölphase zu mindesten 50 Gew.-%, vorzugsweise zu mindestens 80 Gew.-% und insbesondere zu 100 Gew.-% aus den Komponente a) bis c) gebildet werden. Die Gew.-% -Angaben beziehen sich hier auf das Gewicht der Ölphase. Es kann vorteilhaft sein, dass die nicht-wässerige Ölphase der erfindungsgemäßen Mittel zu 100 Gew.% aus Abmischungen der Komponente a) und/ oder b) und c) besteht. Weiterhin kann es vorteilhaft sein, wenn nur Mischungen aus a) und c) oder, vorzugsweise nur b) und c) in den Ölphasen der erfindungsgemäßen Mitteln enthalten sind.

Die Ölphasen der erfindungsgemäßen Mittel weisen vorzugsweise Pourpoints unterhalb 0°C, vorzugsweise unterhalb -5 °C (gemessen nach DIN ISO 3016: 1982-10) auf. Die Brookfield-Viskosität der Ölphasen beträgt bei 0 °C höchstens 50 mPas. Die erfindungsgemäßen Bohrlochbehandlungsmittel weisen, sofern sie als ölbasierte Bohrspülung vom W/O-Typ ausgebildet sind, eine plastische Viskosität (PV) im Bereich von 10 bis 70 mPas und eine Fließgrenze (Yield-Point YP) von 5 bis 60 lb/100 ft², jeweils bestimmt bei 50 °C, auf. Die kinematische Viskosität der Ölphase gemessen nach Ubbelohde bei 20 °C sollte vorzugsweise höchstens 12 mm²/sec betragen. Die wässerige Phase der erfindungsgemäßen Mittel weist vorzugsweise einen pH-Wert im Bereich von 7,5 bis 12, vorzugsweise von 7,5 bis 11 und insbesondere von 8 bis 10 auf.

Neben den oben aufgeführten Bestandteilen, enthalten die erfindungsgemäßen Mittel noch Additive, beispielsweise Beschwerungsmittel, fluid-loss Additive, viskositätsregulierende Additive, Netzmittel, Salze, Biozide, Korrosionsinhibitoren, und/oder eine Alkalireserve. Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden. Die Additive können wasserlöslich, öllöslich und/oder wasser- bzw. öl-dispergierbar sein. Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der z. B. wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Nur auszugsweise sei dementsprechend zitiert: Feindisperse Zusatzstoffe zur Erhöhung der Spülungsdichte: Weit verbreitet ist das Bariumsulfat (Baryt), aber auch Calciumcabonat (Calcit) oder das Mischcarbonat von Calcium und Magnesium (Dolomit) finden Verwendung.
Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.
Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Verdünner zur Viskositätsregulierung: Die sogenannten Verdünner können organischer oder anorganischer Natur sein, Beispiele für organische Verdünner sind Tannine und/oder Qebracho- Extrakt. Weitere Beispiele hierfür sind Lignit und Lignit-Derivate, insbesondere Lignosulfonate.

Wie zuvor allerdings angegeben, wird in einer bevorzugten Ausführungsform der Erfindung auf die Mitverwendung toxischer Komponenten verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen. Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Besonders bevorzugt ist hier die Verwendung von Kalk (Ca(OH)₂) als Alkalireserve. Typische Gehalte von Kalk in den Bohrspülung liegen zwischen 1 und 6 1b/bbl, wobei es entscheiden auf die Art und Zusammensetzung der Ölphase ankommt, welchen Mengen verwendet werden können. Art und Menge dieser basischen Komponenten sind vorzugsweise so gewählt und aufeinander abgestimmt, dass im Falle von hydrolyseanfälligen Estern, insbesondere ungesättigten Estern der Kohlenstoffzahl C16 bis C 24 keine übermäßige Hydrolyse auftritt, da die entstehenden Reaktionsprodukte, insbesondere die Fettsäuren, die Stabilität der Emulsionsbohrspülung beeinträchtigen können. Es ist in diesen Fällen bevorzugt, eine Alkalireserve in der Spülung bereitzustellen, die maximal einer Konzentration von 2 lb/bbl der basischen Komponente, vorzugsweise von Kalk in der Spülung unter Arbeitsbedingungen entspricht.
Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oleophilen Charakters. Gerade die Mitverwendung auch solcher öllöslichen Basen im Rahmen der vorliegenden Erfindung fällt in die Lehre. Oleophile Basen dieser Art, die sich insbesondere durch wenigstens einen längeren Kohlenwasserstoffrest mit beispielsweise 8 bis 36 C-Atomen auszeichnen, sind dann allerdings nicht in der wässrigen Phase sondern in der Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen, wie sie insbesondere bei hydrophilen und zum Ionenaustausch befähigten Tonen anzutreffen sind. Erfindungsgemäß kann damit Einfluss auf die hydrolytische Spaltung und den oleophilen Verschluss wasserreaktiver Gesteinsschichten genommen werden. Die Menge der jeweils eingesetzten Hilfs- und Zusatzstoffe bewegt sich grundsätzlich im üblichen Rahmen und kann damit der zitierten einschlägigen Literatur entnommen werden.

Die Verwendung der Ester der Gruppe c) in Abmischung mit den Komponente a) und/oder b) führt dazu, dass Ölphasen mit niedriger relativer Toxizität gegenüber dem marinen Kleinstlebewesen Leptocheirus plumolosus erhalten werden können.
Weiterhin werden aber durch den Zusatz von Estern der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, die Schmiereigenschaften von Bohrspülungen, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, deutlich verbessert. Vorzugsweise werden zwischen 5 und 15 Gew.%, insbesondere von 8 bis 12 Gew.-% an diesen Estern in der Ölphase eingesetzt, um den gewünschten Schmierungs-Effekt zu erzielen.

Weiterhin kann durch Zusatz der Ester der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, zu Ölphasen von üblichen Bohrspülungen der Einsatz von Strukturbildner, vorzugsweise Produkte auf Basis von ggf. chemisch oder physikalisch modifizierten Tonen, z.B. Bentonite, verringert werden. Somit entstehen beträchtliche Kostenvorteile gegenüber Spülungen nach dem Stand der Technik. Die Einsatzmengen der erfindungsgemäß verwendeten Ester liegt dabei bei zwischen 15 und 100 Gew.-%, vorzugsweise 25 bis 100 Gew.-% und insbesondere von 50 bis 100 Gew.-% bezogen auf die Menge der Ölphase. Durch die erfindungsgemäßen Ölphasen kann der Anteil an Strukturbildnern auf Ton-Basis deutlich reduziert werden. Es ist sogar möglich, Ton-freie Spülungen zu formulieren. Vorzugsweise werden die Ester im Sinne der Erfindung bei Emulsionsbohrspülungen des Invert-Typs, also W/O verwendet.

Es ist im Weiteren nicht bevorzugt, als Ölphase in den erfindungsgemäßen Mitteln Triglyceride und insbesondere Triglyceride nativen Ursprungs mit zu verwenden. Vorzugsweise sind die Bohrlochbehandlungssysteme der vorliegenden Erfindung frei von Ölphasen die nativen Triglyceride als Carrier fluids enthalten. Sie sind insbesondere frei von solchen Carrier fluids, wie sie in der US 4,631,136 offenbart werden. Dies schließt aber die Mitverwendung geringer Mengen an Triglyceriden, z.B. als Schmiermittel nicht aus. A1 geringe Mengen werden dabei Mengen von 0,01 bis 10 Gew.%, insbesondere 0,01 bis 5 Gew.-% verstanden. Besonders bevorzugt sind aber solche Mittel, die keine Triglyceride nativen Ursprungs enthalten.

Die Bohrlochbehandlungsmittel der vorliegenden Erfindung enthalten vorzugsweise Vitamin E gemäß der obigen Beschreibung. Dessen Mitverwendung führt zu einer Stabilisierung der Toxizität auch bei erhöhten Temperaturen. Unter hohen Temperaturen werden hier Werte von größer/gleich 300 °F (149 °C) verstanden. Ein bevorzugter Temperaturbereich liegt bei 300 bis 450 °F (149 °C bis 232 °C) und insbesondere im Bereich von 300 bis 400 °F (149 °C bis 204 °C), vorzugsweise im Bereich von 300 bis 350 °F (149 °F bis 177 °C). Ein weiterer Gegenstand der vorliegenden Erfindung umfasst daher die Verwendung von Vitamin E oder dessen Derivate zur Verbesserung der thermischen Stabilität von Bohrlochbehandlungsmitteln, die eine wässerige und eine Ölphase enthalten, sowie mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel enthalten.

Die Herstellung der erfindungsgemäßen Mittel erfolgt in an sich bekannter Weise durch Vermischen der Flüssigen und festen Bestandteile. Es ist aber bevorzugt, dass die Tocopherol-Komponente nicht zusammen mit der Trägerflüssigkeit vermischt und diese danach mit den anderen Inhaltsstoffen vermischt wird. Vielmehr ist es bevorzugt, die Tocopherol-Komponente als eines der letzten Inhaltsstoffe, auf alle Fälle aber unabhängig von der Carrier-Fluid in die Spülung oder das Mittel einzubringen.

Eine weiterer Ausgestaltung der Erfindung betrifft die Verwendung von Vitamin E oder dessen Derivate zur Verbesserung der thermischen Stabilität von Bohrlochbehandlungsmitteln, die eine wässerige Phase und eine Ölphase enthalten, sowie mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel.

### Beispiele

Es wurden Tests an Bohrspülungssystemen mit unterschiedlichen Antioxidantien durchgeführt. Dabei kam die folgende Basisrezeptur zur Anwendung:

| | | |
|---|---|---|
| Ölphase | 0,63 bbl | |
| Wasser | 0,15 bbl | |
| organophiler Bentonit | 6,0 g | Geltone, Fa. Baroid |
| Emulgator | 9,0 g | (EZ-Mul NT/Invermul NT, Fa. Baroid) |
| fluid loss Additiv | 1,0 g | (Duratone HT, Fa. Baroid) |
| Kalk | 1,0 g | |
| CaCl₂ * 2H₂O | 24,3 g | |
| BaSO₄ | 196,0 g | |

| | | |
|---|---|---|
| ÖI/Wasser-Verhältnis: 80/20 | | |

Als Ölphase und Trägerflüssigkeit wurde eine Mischung interner Olefine der Kettenlänge C16/C18 der Fa. Chevron verwendet. Der Bohrspülung wurden jeweils 0,22 g eines Antioxidanz, nämlich b) Bisphenol A, c) Ascorbinsäure und d) Vitamin E zugesetzt. Der Versuch a) betraf eine Spülung ohne Zusatz eines Antioxidans.

In den folgenden Tabellen 1 a) bis 1c) sind die rheologischen Kenndaten jeweils vor und nach 16 h Alterung der Spülungen a) bis c) bei 325 °F (163 °C) aufgerührt. Die Messungen der rheologischen Daten erfolgten immer gemäß API bulletin RP 13 B-2. Außerdem wurden die Ergebnisse des sog. Leptocheirus-Tests (nach ASTM E 1367 - 92 & EPA/600/R-94/025, Section 11) als F-Wert (= Quotient aus der Toxizität der Bestandteile der nicht-wässerigen Phase und der Toxizität von internen Olefinen der Kettenlänge C16/C18 (Standard IO)) wiedergegeben. Der F-Wert sollte kleiner sein als 1, wenn eine niedrigtoxische Spülung vorliegen soll. Je kleiner der F-Wert, desto niedriger die Toxizität.

**Tabelle 1a):**

| | ungealtert | gealtert | |
|---|---|---|---|
| Elektrische Stabilität | 810 | 530 | V |
| Plastische Viskosität (PV) | 20 | 24 | cP |
| Fließgrenze (YP) | 19 | 1 | lb/100 ft² |
| Gelstärke 10sec/10 min. | 9/11 | 5/7 | lb/100 ft² |
| F-Wert: 0,7 | | | |

**Tabelle 1b):**

| | ungealtert | gealtert | |
|---|---|---|---|
| Elektrische Stabilität | 830 | 525 | V |
| Plastische Viskosität (PV) | 19 | 20 | cP |
| Fließgrenze (YP) | 18 | 5 | lb/100 ft² |
| Gelstärke 10sec/10 min. | 9/10 | 10/12 | lb/100 ft² |
| F-Wert: 1,0 | | | |

**Tabelle 1c):**

| | ungealtert | gealtert | |
|---|---|---|---|
| Elektrische Stabilität | 750 | 580 | V |
| Plastische Viskosität (PV) | 19 | 21 | cP |
| Fließgrenze (YP) | 19 | 8 | lb/100 ft² |
| Gelstärke 10sec/10 min. | 10/12 | 6/8 | lb/100 ft² |
| F-Wert: 0,7 | | | |

Man erkennt, dass der Zusatz von Ascorbinsäure oder Bisphenol A praktisch keinen Einfluss auf die Toxizität der Spülung hat.
Anders ist das bei der Verwendung von Vitamin E (Coviox®T 70). Der Zusatz zur Bohrspülung führt zu einer Verringerung des F-Wertes auf 0,5, ohne das es zu einer Verschlechterung der rheologischen Daten der Spülung gekommen wäre.

Allerdings ist es wesentlich, dass das Vitamin E der fertig formulierten Bohrspülung zugesetzt wird, und nicht nur der nicht-wässerigen Tägerflüssigkeit.
In einem weiteren Versuch wurde nur die Ölphase wie in den obigen Versuchen ausgewählt, nämlich das interne Olefin mit C16/C18-Kettenlänge und dieses einmal das Vitamin E direkt zugesetzt und zum anderen kein Zusatz vorgenommen. Anschließend wurden die Ölphasen 16 h bei 375 °F gealtert und danach der F-Wert bestimmt. Der F-Wert lag bei der nichtadditivierten Ölphase bei 1,2 wohingegen die mit Vitamin E additivierte Ölphase einen F-Wert von 1,3 aufwies.
Dies zeigt, dass der erfindungsgemäße Effekt nur in einer fertig formulierten Spülung auftritt, und nicht in einer reinen Trägerflüssigkeit.

Zum Beweis wurde in einem weiteren Versuch die Trägerflüssigkeit (eine Mischung aus intemen-Olefinen (C16/C18) mit Carbonsäureestern (2-Ethylhexanol plus C14/C18-Carbonsäuren)) im Gewichtsverhältnis 60 : 40 in einer fertig formulierten Bohrspülung analog der obigen Basisrezeptur geprüft. Nach Alterung lag der F-Wert dieser Spülung ohne Antioxidanz bei 0,57. Nach Zusatz von 100 ppm Coviox ® 70 verringerte sich der F-Wert auf 0,39.

## Patentansprüche

1. Verfahren zur Verringerung der Toxizität der nicht-wässerigen Phasen von Bohrlochbehandlungsmitteln, gemessen nach ASTM E 1367 - 92 & EPA/600/R-94/025, Section 11, wobei die Bohrlochbehandlungsmittel eine wässerige Phase, eine Ölphase und mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel enthalten, **dadurch gekennzeichnet, dass** man den formulierten Bohrspülungen Antioxidantien, ausgewählt aus der Gruppe der Tocopherole und deren Derivaten zusetzt.

2. Verfahren nach Anspruch 1, **dadurch gekennzeichnet, dass** die Antioxidantien in solchen Mengen zugesetzt werden, dass die Antioxidantien in Mengen von 0,01 bis 10 Gew.%, vorzugsweise von 0,01 bis 1 Gew.-% und insbesondere in Mengen von 0,1 bis 1 Gew.-%, bezogen auf die gesamte Bohrspülung zugesetzt werden.

3. Verfahren nach den Ansprüchen 1 bis 2, **dadurch gekennzeichnet, dass** die Ölphase ausgewählt ist aus
a) Paraffinen mit 5 bis 22 C-Atomen und/oder,
b) internen Olefine mit 12 bis 30 C-Atomen im Molekül jeweils in Abmischung mit
c) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet,
oder aus Mischungen der Komponenten a) bis c).

4. Verfahren nach den Ansprüchen 1 bis 3, **dadurch gekennzeichnet, dass** die Bohrspülungen als Emulsionen vorliegen, und vorzugsweise als Wasser-in-Öl Emulsionen.

5. Verfahren nach den Ansprüchen 1 bis 4, **dadurch gekennzeichnet, dass** in den Bohrspülungen das Gewichtsverhältnis zwischen der wässerigen- und der Ölphase 50 : 50 bis 1 : 99, vorzugsweise 30 : 70 bis 20 : 80 und insbesondere 10 : 90 beträgt.

6. Verfahren nach den Ansprüchen 1 bis 5, **dadurch gekennzeichnet, dass** die Ölphase der Bohrspülung zu mindestens 50 Gew.-%, vorzugsweise zu mindestens 80 Gew.-% und insbesondere zu mindestens 90 Gew.-% aus Verbindungen a) und/oder b) und/oder c) besteht.

7. Verfahren nach einem der Ansprüche 1 bis 6, **dadurch gekennzeichnet, dass** die Komponente a) der Ölphase ausgewählt ist aus der Gruppe der linearen oder verzweigten Paraffine mit 10 bis 21 C-Atomen, wobei verzweigte Paraffine besonders bevorzugt sind.

8. Verfahren nach einem der Ansprüche 1 bis 7, **dadurch gekennzeichnet, dass** die Komponente b) der Ölphase ausgewählt ist aus der Gruppe der internen Olefine mit 12 bis 30 C-Atomen, vorzugsweise 14 bis 24 und insbesondere mit bis zu 20 C-Atomen.

9. Verfahren nach den Ansprüchen 1 bis 8, **dadurch gekennzeichnet, dass** die Komponente c) der Ölphase ausgewählt ist aus Estern der Formel R-COOR' in denen R für gesättigte oder ungesättigte lineare Alkylreste mit 15 bis 23 C-Atomen steht und R' einen linearen oder verzweigten, gesättigten Alkylrest mit 6 bis 22 C-Atomen bedeutet.

10. Verfahren nach den Ansprüchen 1 bis 9, **dadurch gekennzeichnet, dass** in der Ölphase neben den Estern gemäß Anspruch 8, maximal 15 Gew.-% (bezogen die Ölphase) an Estern mit Resten R, die für Alkylreste mit mehr als 23 C-Atomen stehen, enthalten sind.

11. Verfahren nach den Ansprüchen 1 bis 10, **dadurch gekennzeichnet, dass** als Antioxidans Vitamin E ausgewählt ist.

12. Bohrlochbehandlungsmittel, insbesondere Bohrspülung, enthaltend eine wässerige und eine Ölphase, sowie mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel, **dadurch gekennzeichnet, dass** die Bohrspülung Vitamin E oder ein Derivat des Vitamin E enthält.

13. Bohrlochbehandlungsmittel nach Anspruch 12, **dadurch gekennzeichnet, dass** die Ölphase ausgewählt ist aus der Gruppe der
a) Paraffinen mit 5 bis 22 C-Atomen und/oder,
b) internen Olefine mit 12 bis 30 C-Atomen im Molekül jeweils in Abmischung mit
c) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet,
oder aus Mischungen der Komponenten a) bis c).

14. Bohrlochbehandlungsmittel nach den Ansprüchen 12 bis 13, **dadurch gekennzeichnet, dass** sie als Emulsion, vorzugsweise als Wasser-in-Öl (W/O) Emulsion vorliegt.

15. Bohrlochbehandlungsmittel nach den Ansprüchen 12 bis 14, **dadurch gekennzeichnet, dass** das Gewichtsverhältnis zwischen der wässerigen Phase und der Ölphase 50 : 50 bis 1 : 99, vorzugsweise 10 : 90 bis 30 : 70 und insbesondere von 10 : 90 bis 20 : 80 beträgt.

16. Bohrlochbehandlungsmittel nach den Ansprüchen 12 bis 15, **dadurch gekennzeichnet, dass** die Ölphase zu mindestens 50 Gew.-%, vorzugsweise zu mindestens 80 Gew.-% und insbesondere zu 90 % aus Verbindungen a) bis c) gemäß Anspruch 13 enthält.

17. Bohrlochbehandlungsmittel nach einem der Ansprüche 12 bis 16, **dadurch gekennzeichnet, dass** die Komponente a) ausgewählt ist aus der Gruppe der linearen oder verzweigten Paraffine mit 10 bis 21 C-Atomen, wobei verzweigte Paraffine besonders bevorzugt sind.

18. Bohrlochbehandlungsmittel nach einem der Ansprüche 12 bis 17, **dadurch gekennzeichnet, dass** die Komponente b) ausgewählt ist aus der Gruppe der internen Olefine mit 12 bis 30 C-Atomen, vorzugsweise 14 bis 24 und insbesondere mit bis zu 20 C-Atomen.

19. Bohrlochbehandlungsmittel nach den Ansprüchen 12 bis 18, **dadurch gekennzeichnet, dass** die Komponente c) ausgewählt ist aus Estern der Formel R-COOR' in denen R für gesättigte oder ungesättigte lineare Alkylreste mit 15 bis 23 C-Atomen steht und R' einen linearen oder verzweigten, gesättigten Alkylrest mit 6 bis 22 C-Atomen bedeutet.

20. Bohrlochbehandlungsmittel nach den Ansprüchen 12 bis 19, **dadurch gekennzeichnet, dass** neben den Estern gemäß Anspruch 19 maximal 15 Gew.% (bezogen die Ölphase) an Estern mit Resten R, die für Alkylreste mit mehr als 23 C-Atomen stehen, enthalten sind.

21. Bohrlochbehandlungsmittel nach den Ansprüchen 12 bis 20, **dadurch gekennzeichnet, dass** die nichtwässerige Ölphase zu 100 Gew.-% aus den Verbindungen a) und/oder b) und c) besteht.

22. Bohrlochbehandlungsmittel nach den Ansprüchen 12 bis 21, **dadurch gekennzeichnet, dass** die nichtwässerige Ölphase zum mindestens 50 Gew.-%, vorzugsweise zu mindestens 80 Gew.-% und insbesondere zu 100 Gew.-% Abmischungen aus Verbindungen b) und c) enthält.

23. Bohrlochbehandlungsmittel nach den Ansprüchen 12 bis 22, **dadurch gekennzeichnet, dass** neben den Verbindungen a) bis c) noch weitere, ökologisch verträgliche wasserunlösliche Komponente enthalten sind.

24. Bohrlochbehandlungsmittel nach den Ansprüchen 12 bis 23, **dadurch gekennzeichnet, dass** als weitere Komponente Ester aus C1-C5 Monocarbonsäuren mit 1- und/oder mehrfunktionellen Alkoholen Verwendung finden, wobei die Alkohole mindestens 6 ,vorzugsweise mindestens 8 und die mehrwertigen Alkohole 2 bis 6 C-Atome im Molekül aufweisen.

25. Bohrlochbehandlungsmittel nach den Ansprüchen 12 bis 24, **dadurch gekennzeichnet, dass** als weitere Komponente Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, in der nichtwässerigen Ölphase enthalten sind.

26. Bohrlochbehandlungsmittel nach den Ansprüchen 12 bis 25, **dadurch gekennzeichnet, dass** die nichtwässerige Ölphase einen Pourpoint unterhalb 0°C, vorzugsweise unterhalb -5 °C aufweist.

27. Bohrlochbehandlungsmittel nach den Ansprüchen 12 bis 26, als ölbasierte Bohrspülung vom W/O-Typ eine plastische Viskosität (PV) im Bereich von 10 bis 70 mPas und eine Fließgrenze (Yield-Point YP) von 5 bis 60 lb/100 ft² jeweils bestimmt bei 50 °C, aufweist, **dadurch gekennzeichnet, dass** die nichtwässerige Ölphase eine Brookfield-Viskosität, bei 0 °C von höchstens 50 mPas aufweist.

28. Bohrlochbehandlungsmittel nach den Ansprüchen 12 bis 27, **dadurch gekennzeichnet, dass** es als ölbasierte Bohrspülung vom W/O-Typ eine plastische Viskosität (PV) im Bereich von 10 bis 60 mPas und eine Fließgrenze (Yield-Point YP) von 5 bis 40 lb/100 ft² jeweils bestimmt bei 50 °C, aufweist.

29. Bohrlochbehandlungsmittel nach den Ansprüchen 12 bis 28, **dadurch gekennzeichnet, dass** die Ölphase eine Viskosität nach Ubbelohde bei 20 °C von maximal 12 mm²/sec aufweist.

30. Bohrlochbehandlungsmittel nach den Ansprüchen 12 bis 29, **dadurch gekennzeichnet, dass** die wässerige Phase einen pH-Wert im Bereich von 7,5 bis 12, vorzugsweise von 7,5 bis 11 und insbesondere von 8 bis 10 aufweist.

31. Bohrlochbehandlungsmittel nach den Ansprüchen 12 bis 30, **dadurch gekennzeichnet, dass** die nichtwässerige Ölphase Abmischungen der Komponenten a) oder b) und c) im Gewichtsverhältnis von 10 : 1 bis 1 : 1, vorzugsweise von 5 :1 bis 1 : 1 und insbesondere von 3 : 1 bis 1 : 1 enthalten.

32. Bohrlochbehandlungsmittel nach den Ansprüchen 12 bis 31, **dadurch gekennzeichnet, dass** es nichtwässerige Komponenten b) enthält, deren relative Toxizität in Verhältnis zu Standard 10 der Kettenlänge C16/C18 größer als 1 ist, wobei in der nichtwässerigen Ölphase Verbindungen gemäß c) enthalten sein müssen.

33. Bohrlochbehandlungsmittel nach den Ansprüchen 12 bis 32, **dadurch gekennzeichnet, dass** es frei von Triglyceriden, insbesondere von natürlichen Triglyceriden ist.

34. Bohrlochbehandlungsmittel nach den Ansprüchen 12 bis 33, **dadurch gekennzeichnet, dass** für die nicht-wässerige Phase gilt, dass der Quotient aus der Toxizität der Bestandteile der nicht-wässerigen Phase und der Toxizität von internen Olefinen der Kettenlänge C16/C18 (Standard 10), jeweils gemessen nach dem Leptocheirus plumulosus acute, static 96-hour/10 day sediment toxicity test (nach ASTM E 1367 - 92 & EPA/600/R-94/025, Section 11), kleiner 1 ist.

35. Bohrlochbehandlungsmittel nach den Ansprüchen 12 bis 36, **dadurch gekennzeichnet, dass** es Vitamin E oder dessen Derivate in Mengen von 0,01 bis 10 Gew.-%, vorzugsweise 0,01 bis 1,0 Gew.-% und insbesondere Mengen von 0,05 bis 1,0 Gew.-%, bezogen auf die fertig formulierte Bohrspülung.

36. Verwendung von Vitamin E oder dessen Derivate zur Verbesserung der thermischen Stabilität von Bohrlochbehandlungsmitteln, die eine wässerige Phase und eine Ölphase enthalten, sowie mindestens ein Additiv, ausgewählt aus den Klassen der viskositätsmodifizierenden Mittel, Beschwerungsmittel, Emulgatoren, fluid-loss Additive, pH-Regulantien, Salze, Biozide, Korrosionsinhibitoren, Alkalireserve und/oder Netzmittel.
